# EUROPÄISCHE PATENTANMELDUNG

(11) **EP 1 280 333 A1**
(43) Veröffentlichungstag der Anmeldung: **29.01.2003**
(21) Anmeldenummer: 01117647.6
(22) Anmeldetag: 24.07.2001
(51) Int. Cl.: H04N 1/407

(54) **Automatische Bestimmung einer Bildqualität**

(71) Anmelder: IMIP LLC, Wilmington, Delaware 19801 (US)
(72) Erfinder: Franzke, Dieter, 5210 Windisch (CH); Kohlbrenner, Adrian, 8800 Thalwil (CH); Kündig, Armin, 8046 Zürich (CH)
(74) Vertreter: Schwabe - Sandmair - Marx

(57) **Zusammenfassung**

Die Erfindung betrifft ein Verfahren zur automatischen Bestimmung einer Bildqualität für Tintenstrahl-Fotoprinter bzw. Farbtintenstrahl-Fotoprinter, wobei eine digitale Bezugstestkarte erstellt wird, die einem Drucker zugänglich ist. Der Drucker bzw. Fotoprinter druckt die Bezugstestkarte aus, so dass ein fotoprinterspezifischer Druck der Bezugstestkarte entsteht, der digitalisiert wird, um die digitalisierten Bilddaten mit einer optimalen digitalen Bezugstestkarte zu vergleichen und um aufgrund von Abweichungen bzw. Übereinstimmungen zwischen dem fotoprinterspezifischen Testkartendruck und der Bezugstestkarte die Bildqualität eines Bildes bestimmen zu können.

## Beschreibung

Die vorliegende Erfindung betrifft ein Verfahren zur automatischen Bestimmung einer Bildqualität eines durch eine Druck- bzw. Printeinrichtung oder Belichtereinrichtung erhaltenen Abzuges bzw. Bildes, insbesondere für Tintenstrahl-Fotoprints, mit den Merkmalen des Patentanspruchs 1. Ferner betrifft die Erfindung einen Datenträger mit einem entsprechenden Verfahren in einer beliebigen Programmiersprache zur Steuerung von elektrischen bzw. elektronischen Funktionseinrichtungen zur Durchführung des Verfahrens.

Im Stand der Technik ist es bekannt, Verfahren zur Aufwertung von Bildern einzusetzen. So lässt sich die Bildqualität beispielsweise durch Änderung des Farbspektrums während der Belichtung oder durch Aufhellung oder Abdunklung von Abschnitten eines Bildes verbessern. Auch ist es möglich, andere Qualitätsverbesserungen vorzunehmen, die einige Kunden als angenehm empfinden.

Während es möglich ist, die Bildqualität eines Bildes zu verbessern, gibt es praktisch keine Möglichkeit, den Begriff der Bildqualität allgemeingültig zu definieren und in Bezug auf eine derart allgemein gültige Definition der Bildqualität Feststellungen zu treffen, wie etwa, dass ein Farbtintenstrahldrucker eine Wartung benötigt, eine andere Ansteuerungssoftware benutzt werden muss, oder dgl. mehr.

Für Laserkopierer bzw. Inkjetdrucker gibt es zwar die Möglichkeit, anhand von mitgedruckten Mustern eine Korrektur und Optimierung druckerintern vorzunehmen, jedoch führt diese herkömmliche Überprüfungs- und Korrekturtechnologie zu keiner allgemein gültigeren Definition.

Im Stand der Technik ist es damit nach wie vor eine Erfahrungs- und Entscheidungsangelegenheit für einen Betrachter, ob eine Bildqualität ausreicht oder ob eine Bildqualität verbesserungswürdig ist, bzw. aus einem Toleranzintervall herausfällt. So kann dem einen Betrachter ein Bild noch zusagen, während ein anderer bereits störende Effekte feststellt, wie etwa eine unangenehme Körnigkeit, eine unangenehme Coalescence oder ein sichtbares horizontales oder vertikales Banding. Natürlich können auch Farbdefekte entstehen, der Kontrast kann unzulänglich sein, und dgl. mehr.

Diese ganzen verschiedenen Bilddefekte und weitere hier noch nicht genannte Bilddefekte können in tatsächlichen Bildern auftreten und von einigen Kunden wahrgenommen werden, während andere diese Defekte nicht erkennen. Entsprechend kann auch ein Betreiber eines Bilddruckers oder Photobelichters mehr oder weniger kritisch sein, da der Begriff der Bildqualität an sich weder normiert noch festgelegt ist. Auch die Qualität von Bilddaten an sich kann zu Abweichungen bei den herzustellenden Abzügen führen und kann auch zu ungerechtfertigten Qualitätsbeanstandungen führen. So können beispielsweise digitale Bilddaten mangelhaft sein (z.B. zu geringe Ortsauflösung in Folge einer zu geringen Anzahl von Bildpunkten, oder zu geringe Farbtiefe) und die mangelhafte Bildqualität wird dem Fotoprinter zugeschrieben, der prinzipiell nichts für die mangelnde Bildqualität kann, da dieser durchaus in der Lage wäre bessere Bilder zu produzieren, wenn er entsprechend gute Daten zur Verfügung hätte. Auch Software zur Aufbereitung von Bilddaten kann hier Probleme mit sich bringen, so dass es auch unter diesem Gesichtspunkt günstig ist, Fehler besser lokalisieren zu können, wenn beispielsweise ein Fotoprinter zufriedenstellend arbeitet, jedoch die Bilddaten oder die Bilddatenaufbereitung mangelhaft sind bzw. ist.

Es ist folglich eine Aufgabe gemäß der vorliegenden Erfindung, ein Verfahren zur automatischen Bestimmung einer Bildqualität zur Verfügung zu stellen, um insbesondere eine objektive, betrachterunabhängige Bestimmung einer Bildqualität zu ermöglichen. Ferner soll ein Verfahren vorgeschlagen werden, das es ermöglicht, die Notwendigkeit einer Wartung oder Kalibrierung bei einem Fotoprinter und insbesondere einem Farbtintenstrahlfotoprinter feststellen zu können bzw. Mängel innerhalb der einzelnen Stationen der Bilderstellung besser lokalisieren zu können. Insbesondere lassen sich so auch Mängel des Verbrauchsmaterials, beispielsweise Papier, Tinte, Toner, Entwicklerchemikalien, feststellen.

Gemäß der Erfindung wird wenigstens eine der obigen Aufgaben teilweise durch den Gegenstand des Patentanspruchs 1 gelöst. Zweckmäßige Varianten des erfindungsgemäßen Verfahrens werden durch die Unteransprüche definiert.

Die gemäß der Erfindung zu erzielenden Vorteile gemäß einem Aspekt beruhen darauf, dass eine digitale Bezugstestkarte oder ein Satz von digitalen Bezugstestkarten erstellt wird. Solche Bezugstestkarten können sowohl direkt digital als auch durch Digitalisieren von entsprechenden Vorlagen erstellt werden. Einem in Bezug auf seine Bildqualität zu prüfender Fotoprinter, insbesondere ein Tintenstrahlfotoprinter bzw. Farbtintenstrahlfotoprinter, wird die digitale Form der Bezugstestkarte zugänglich gemacht, um dieses ausdrucken zu lassen. Hierdurch wird ein fotoprinterspezifischer Testkartendruck aufgrund der digitalen Form der Bezugstestkarte ausgedruckt. Der fotoprinterspezifische Testkartendruck wird, nach dessen Ausdrucken, abgetastet bzw. abgescannt. Diese abgetastete bzw. abgescannte und somit digitale Form des fotoprinterspezifischen Testkartendrucks wird dann mit der digitalen Form der Bezugstestkarte verglichen. Anhand von Übereinstimmungen und/oder Abweichungen aufgrund des Vergleiches zwischen der Bezugstestkarte und dem fotoprinterspezifischen Testkartendruck kann dann eine Qualitätsgröße bzw. ein normierter Qualitätswert errechnet werden, den ein Fotoprinter und insbesondere ein Farbtintenstrahlfotoprinter erzielt.

Die Bezugstestkarte kann vorteilhafterweise mehrere auf unterscheidbare Ursachen für mangelnde Bildqualität spezifisch reagierende Testmuster enthalten oder solche Testmuster können auf einem Satz von Bezugstestkarten angeordnet sein. Die Testmuster der Bezugstestkarte können dann mit den korrespondierenden Testmustern des fotoprinterspezifischen Testkartendrucks bzw. dessen digitalisierten Bilddaten verglichen werden. Dabei können vorteilhafterweise den Testmustern der Bezugstestkarte optimale Qualitätswerte zugewiesen werden. Diese werden mit Realqualitätswerten eines fotoprinterspezifischen Testmusters verglichen und aufgrund der Abweichungen kann die Qualität der Ausdrucke bzw. der Bildprints eines Fotoprinters bestimmt werden. Dabei können dem fotoprinterspezifischen Testmuster bzw. dem Bezugstestmuster Toleranzintervalle zugeordnet werden, innerhalb derer der betreffende Qualitätsmangel noch akzeptabel ist. Außerhalb dieser Grenzwerte bzw. dieser Toleranzintervalle können entsprechende Reaktionen bewirkt werden, wie etwa die automatische Veranlassung einer Wartung, die gezielte Anwendung von Fehlerkorrektursoftware, das Ersetzen von mangelhaften Verbrauchsmaterialien oder dgl.

Gemäß der vorliegenden Erfindung wird es insbesondere ermöglicht, die Erzeugnisse von Tintenstrahldruckern für die Herstellung von kundenspezifischen Abzügen anhand von gerätespezifischen Testausdrucken zu überprüfen. Dabei werden, wie oben angedeutet, vorbestimmte Testmuster ausgedruckt und diese gedruckten Testmuster werden gescannt bzw. digitalisiert, um sie anschließend mit den digitalen Bezugstestmustern vergleichen zu können. Dabei werden insbesondere Bildmerkmale berücksichtigt, die die Bildqualität beeinflussen können, insbesondere derartige Effekte wie Streifenbildung(Banding), Koaleszenz (Coalescence), Farbbluten (Color bleed), Punktzuwachs (Dot Gain), Bild- und Farbdeckungsfehler (Image- und Colormisregistration) und Bildparameter wie Körnigkeit (Graininess), Gleichmässigkeit (Uniformity), Bildschärfe (d.h. das Kontrast-Auflösungsverhalten) und Farbgleichgewicht (Color balance), die. Diese Effekte können für jede einzelne Druckfarbe aber auch für Mischfarben bestimmt werden.

Die eingescannten gerätespezifischen Testkartendrucke werden mit beliebigen Bildanalysemethoden, insbesondere auch bereits bekannten Bildanalysemethoden ausgewertet und es werden spezifische Parameter bestimmt, die im Vergleich mit der digitalen Form der Bezugstestkarte die Möglichkeit eröffnen, einen Bildqualitätswert festzustellen.

Insbesondere weil die so bestimmte unbewertete, technische Bildqualität auf rein physikalischen, d.h. insbesondere direkt messbaren, Grössen basiert, kann es sein, dass die so bestimmte Bildqualität nur ungenügend mit der von einem Menschen wahrgenommenen Bildqualität übereinstimmt. Im Speziellen ist es möglich, auch noch Wertungs- und Akzeptanztests mit einer oder mehreren Versuchspersonen durchzuführen, um relevante Toleranzintervalle bzw. deren Grenzwerte zu bestimmen,d.h. um die unbewertete, technische Bildqualität in eine wahrnehmungsgerechte Bildqualität zu überführen.

Vorteilhafterweise kann auch eine Normierung in das Verfahren gemäß der Erfindung einbezogen werden, um gerätespezifische Eigenschaften von Geräten zu berücksichtigen, die an dem erfindungsgemäßen Verfahren zur Bestimmung einer Bildqualität beteiligt sind. Wird beispielsweise ein Flachbettscanner mit bestimmten Charakteristiken zur Abtastung eines fotoprinterspezifischen Testkartendrucks verwendet, kann in Bezug auf diesen Scanner berücksichtigt werden, dass dieser etwa die Körnigkeit eines Testkartendrucks nicht so gut erfasst, wie etwa ein anderer Flachbettscanner. Hier können beispielsweise bei der digitalen Auswertung der Scannergebnisse Korrekturgrössen eingeführt werden, die zum Beispiel dazu führen, dass beim Bewerten der Körnigkeit eines korrigierten erfassten Testdrucks diese schlimmer eingeschätzt wird, als sie vor der Anwendung der-Korrekturgrössen angegeben worden ist, weil bekannt ist, dass die auf dem betreffende Typ von Flachbettscanner basierende unkorrigierte Bewertung den Grad der Körnigkeit unterschätzt. Diese Art von Kalibrierung kann geräteabhängig und auch abhängig von den Geräteeinstellungen durchgeführt werden.

So ist es beispielsweise möglich, eine für eine Abtastung eines druckerspezifischen Testkartendrucks eingesetzte Digitalkamera bezüglich ihrer Eigenschaften zu kompensieren, indem ein Geräteprofil berücksichtigt wird, das für die betreffende Digitalkamera bzw. deren Eigenschaften charakteristisch sein muss. Die von der Kamera erfassten Bilddaten können mit dem Geräteprofil verrechnet werden, so dass sich kalibrierte Bilddaten ergeben, die ausschließlich Aufschluss über die tatsächliche Bildqualität des betreffenden Farbtintenstrahldruckers geben und keine Verfälschungen mehr aufweisen, die durch andere an dem Verfahren zur Bestimmung einer Bildqualität beteiligte Geräte eingebracht worden sind. Ein derartiges gerätespezifisches Geräteprofil von Scannern oder Digitalkameras kann in der Form eines an sich bekannten ICC-Profils mit üblicher Software erstellt werden und kann die gescannten Bilddaten automatisch begleiten, um bei der Berechnung der Bildqualität automatisch berücksichtigt zu werden.

Bei der Bestimmung einer Bildqualität wird in der Regel auch eine Transformation der Bilddaten in einen geeigneten Farbraum eingesetzt werden. Zwar können beliebige Farbräume eingesetzt werden, jedoch hat es sich als zweckmäßig erwiesen, wenn der Farbraum, in den die Daten zum Vergleich mit dem Bezugstestmuster transformiert werden, die Wahrnehmung des Menschen berücksichtigt. In diesem Zusammenhang ist es günstig, wenn der Zielfarbraum dem physiologischen Farbempfinden des Menschen gerecht wird, was beispielsweise durch eine Transformation der Bilddaten in den CIE Lab Farbraum erreicht werden kann.

Es ist zwar möglich, die fotoprinterspezifischen Testkartendrucke gegenüber einem Scanner oder gegenüber einer Digitalkamera händisch auszurichten bzw. zu orientieren, jedoch ist es zur Vermeidung von Fehlern bzw. Fehlorientierungen und zur Vereinfachung des Arbeitsablaufs vorteilhaft, wenn die Bezugstestkarte und somit auch der fotoprinterspezifische Testkartendruck mit Orientierungsmustern oder -markierungen versehen sind, die es einem Scanner bzw. einer Digitalkameraermöglichen, die absolute Lage und/oder die Größe des fotoprinterspezifischen Testkartendrucks zu bestimmen, so dass sichergestellt ist, dass die Testmuster des fotoprinterspezifischen Testkartendrucks gefunden werden und in die gewünschte Relation zu den entsprechenden Mustern der Bezugstestkarte gesetzt werden. Natürlich kann diese Tätigkeit auch nachfolgend durch einen Computer durchgeführt werden, der das vom Scanners bzw. von der Digitalkamera gelieferte Bild des Testkartendrucks in Bezug auf die Orientierungsmuster untersucht und anhand dieser Orientierungsmuster die Zuordnung der einzelnen Testmuster und sämtliche weiteren Berechnungsschritte vornimmt, die von der Lage der Testmuster abhängig sind. Auf diese Weise können auch andere mögliche Fehlerquellen, wie etwa Orientierungsfehler und Verzerrungen, kompensiert werden.

Natürlich ist es möglich, auf einer Bezugstestkarte mit einem fotoprinterspezifischem Testbild weitere Information vorzusehen, wie etwa eine Kennung für einen bestimmten Fotoprinter oder dgl., etwa zu statistischen Zwecken. Natürlich können auf der Bezugstestkarte auch Informationen vorgesehen sein, um es einem anzuwendenden Analyseprogramm zu ermöglichen, Informationen über die erforderlichen Analyseteile, über Parameter und dgl. mehr zu geben.

Nachfolgend werden einige bekannte Analyseverfahren in Bezug auf ihre Literaturzitate wiedergegeben. Die betreffenden Literaturzitate werden ausdrücklich in den Offenbarungsgehalt der vorliegende Offenbarung aufgenommen und die einzelnen Analyseverfahren oder Kombinationen hiervon gehören zum Schutzgegenstand der vorliegenden Offenbarung. D.h., es können auch Ansprüche auf die Verfahrensweisen gemäß den nachfolgenden Literaturzitaten gerichtet werden. Die durch Bezugnahme aufgenommenen Offenbarungen lauten wie folgt:

Zur Bildqualitäts-Metrik: D. René Rasmussen et al, "Image Quality Metrix: Applications and Requirements", IS&T's 1998 PICS Conference; zur Coalescence: Nathan Jones et al., "Characterizing and modeling coalescence in inkjet printing", IS&T, NIP14, International Conference on Digital Printing Technologies, Oct. 1998, Toronto; zum Banding: Guo-Yau Lin et al., "Banding artifact reduction in electrophotographic printers by using pulse width modulation", IS&T's NIP16: 2000 International Conference on Digital Printing Technologies; zur Contrast Sensitivity Function (CSF): Peter G. Barten, "Evaluation of subjective image quality with the square-root integral method"; und zur Power-Spectrum Analysis: E. Oran Brighham, "The Fast Fourier Transform", Prentice Hall, 1988, p365ff.

Beispielhaft wird in Bezug auf die Coalescence-Analyse und unter Bezugnahme auf das voranstehende Literaturzitat zur Coalescence-Analyse dieses Analyseverfahren angesprochen.

Bei der Coalescence-Analyse werden Testkarten mit uniformen, unstrukturierten Testmustern verwendet. Typischerweise umfasst eine solche Testkarte ein Feld von z.B. 9 mal 11 Testmustern. Die einzelnen Testmuster haben dabei verschiedene Dichten und verschiedene Farben.

Dabei umfasst eine Testkarte eine elektronische Bildvorlage (z.B. eine Bilddatei im TIF-, BMP- oder PSD-Format) mit geeignet strukturierten und/oder unstrukturierten Mustern, Kennungen und Markierungen. Ein Testmuster repräsentiert einen geometrisch abgegrenzten Teilbereich einer Testkarte, welcher zur Bildqualitätsanalyse verwendet werden kann. Verschiedene Arten von Testmustern sind einsetzbar und können Verwendung finden. Ein Testmuster kann strukturiert (z.B. Linienmuster) oder auch unstrukturiert (z.B. uniforme Farbflächen) sein. Die Art des Testmusters ist im allgemeinen abhängig von der durchzuführenden Analyse, wobei etwa für Banding-Analysen und Coalescence-Analysen verschiedene Arten von Testmustern verwendet werden.

Die Testmuster werden eingesetzt, um den Testausdruck zur Erstellung eines Testbildes zu veranlassen. Der Ausdruck derdigitalen Form der Bezugstestkarte wird auf einem geeigneten Gerät, z.B. einem Ink-Jet Drucker, einem Laser-Drucker, einem Fotobelichter, oder dgl. veranlasst. Der Ausdruck kann auf einem beliebigen Medium, welches von Interesse ist, erfolgen, etwa auf Papier, Folie, Fotopapier oder Textilien. Dieser Testkartendruck wird anschliessend abgetastet und digitalisiert.

Das Testkartenbild stellt dabei ein elektronisches Bild des mit einem Scanner oder einer Digitalkamera erfassten (d.h. abgetasteten und digitalisierten) Testkartendrucks dar. Das Testbild besteht somit aus digitalen Daten und kann z.B. in Form einer Datei (z.B. einer Bilddatei im TIF, BMP oder PSD Format) oder in einem Speicher im Computer (z.B. in der Zwischenablage der Benutzeroberfläche) vorhanden sein.

Die vorbereiteten Bilddaten werden mit einer zweidimensionalen Fouriertransformation in den Frequenzraum überführt. Um ein richtungsunabhängiges eindimensionales Frequenzspektrum (Leistungsdichtespektrum) zu erhalten, wird zunächst der zweidimensionale Frequenzraum von kartesischen in polare Koordinaten transformiert. Aus diesen wird dann schließlich eine Schätzung des eindimensionalen Leistungsdichtespektrums berechnet. Nicht alle Frequenzkomponenten dieses Spektrums werden aber vom Menschen gleich stark (oder überhaupt) wahrgenommen. Diesem Umstand wird Rechnung getragen indem das Leistungsdichtespektrum mit der sog. Contrast Sensitivity Function (CSF) gewichtet wird. Hierbei werden gewissen Annahmen für die Beobachtungsdistanz und die Beleuchtungsstärke vorgenommen. Für diese Coalescenceanalyse ist nur ein ganz bestimmter Frequenzbereich dieses gewichtete Spektrums maßgebend. Mit einem Bandpassfilter wird dieser Teil aus dem Spektrum extrahiert und anschließend wird die totale Leistung in diesem Frequenzband bestimmt. Diese totale Leistung wird dann als technisches Maß für die Coalescence verwendet. Mit einer geeigneten Tabelle oder einer geeigneten Funktion wird dieses technische Maß in ein Bildqualitätsmaß, das der menschlichen Wahrnehmen gerecht wird, überführt. Diese Tabelle oder Funktion ist zuvor durch Versuche mit Versuchspersonen ermittelt worden.

Die Bezugstestkarte ist eine Testkarte, welche eine gewisse Anzahl von Testmustern umfasst. Die Anzahl und Art der Testmuster ist abhängig von der damit auszuführenden Analyse. So kann z.B. eine Testkarte für eine Bandinganalyse ein unstrukturiertes Testmuster und eine Testkarte für eine Coalescenceanalyse ein Feld von 9 mal 11 unstrukturierten Testmustern enthalten. Die Anordnung der Testmuster, die genaue Lage der einzelnen Testmuster und die Art der einzelnen Testmuster kann in einer separaten elektronischen Liste oder Datenbank gespeichert sein. Auf der Testkarte ist eine maschinenlesbare Kennung aufgebracht, welche die Testkarte einem entsprechenden Listeneintrag oder Datensatz in der Datenbank zuordnet. Außerdem können sich auf der Testkarte eine Reihe von Markierungen befinden. Die Markierungen dienen dazu, die Karte maschinenlesbar, d.h. insbesondere vollautomatisch analysierbar zu machen. Geeignete Markierungen können unter anderem dazu verwendet werden, um folgende Parameter und Informationen der Testkarte respektive des Testdrucks, d.h. des gerätespezifischen Ausdrucks der Testkarte, zu bestimmen:
- die Lage der gedruckten Testmuster auf dem Testdruck,
- die genaue Größe des Testdrucks,
- die genaue Orientierung des Testdrucks (Winkel),
- die geometrische Verzerrung des Testdrucks,
- den Kartentyp (z.B. Karte für Coalescenceanalyse, für Graininessanalyse, etc.) und
- weitere Information (z.B. verwendete Druckrichtung).

Eine derartige Testkarte gemäß der Erfindung kann gleichfalls zum Gegenstand eines Anspruchs erhoben werden.

Nachfolgend wird die vorliegende Erfindung anhand von bevorzugten Ausführungsformen unter Bezugnahme auf die beigefügten Darstellungen näher erläutert. Dabei werden weitere Aufgaben, Merkmale und Vorteile gemäß der Erfindung offenbart. Es zeigen:
- Fig. 1a bis c: Testmuster auf Testkartenausdrucken zur Graininess, Coalescnece und zum Banding von Druckern mit guter Druckqualität;
- Fig. 2a bis c: Testmuster auf Testkartenausdrucken zur Graininess, Coalescence und zum Banding von Druckern mit schlechter Druckqualität; und
- Fig. 3: ein Blockdiagramm eines Verfahrensablaufes mit Merkmalen gemäß der Erfindung.

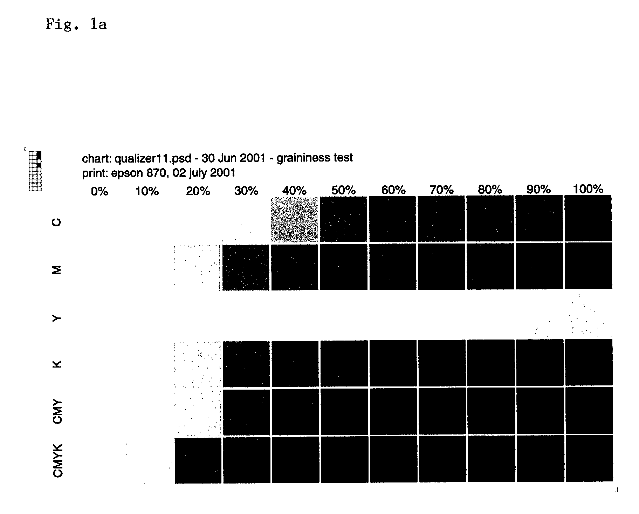

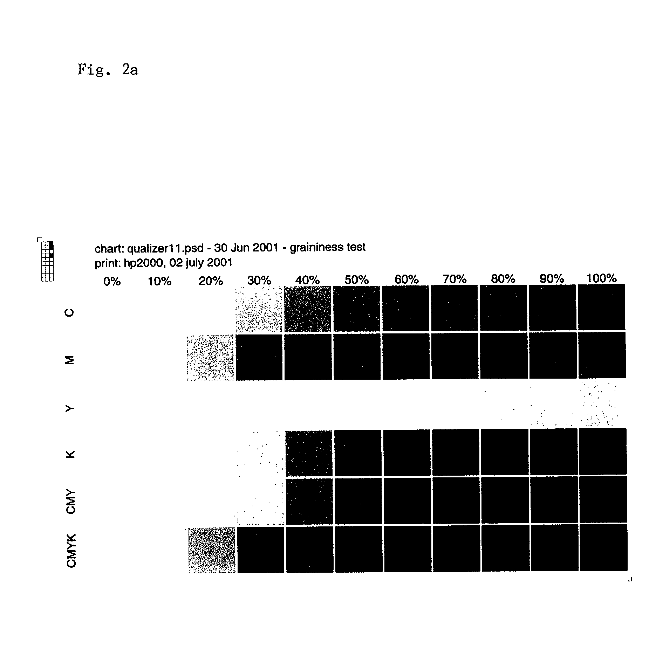

In den Fig. 1a bis 1c dargestellte Testmuster weichen nur wenig vom Optimum ab, d.h. sie unterscheiden sich nur geringfügig vom jeweiligen Bezugstestmuster. Die in den Fig. 2a bis 2c dargestellten Testmuster hingegen weichen stark vom Optimum ab. Die dargestellten Muster werden erfasst und rechnerisch mit den entsprechenden Mustern der digitalen Bezugstestkarte verglichen, um festzustellen, wie die Bildqualität des fotoprinterspezifischen Ausdrucks im Vergleich mit der digitalen Vorlage, d.h. der Testmuster der Bezugstestkarte, ist und ob diese Qualität innerhalb des festgelegten Qualitätstoleranzbereiches liegt.

Dementsprechend zeigt die Fig. 2a ein fotoprinterspezifisches Testmuster, das eine für einen Betrachter stark störende Körnigkeit erkennen lässt, während Fig. 1a rechts ein fotoprinterspezifisches Testmuster zeigt, das keine störende Körnigkeit erkennen lässt.

Ein Vergleich der fotoprinterspezifischen Testmuster mit den zugehörigen Bezugstestmustern lässt die Körnigkeit des Testmusters in Fig. 2a deutlich werden. Eine derartige Körnigkeit könnte je nach Anwendung außerhalb eines Toleranzintervalls liegen und würde eine Kalibrierung, eine Änderung der Druckstrategie, eine Wartung, ein Überprüfen und/oder Wechseln des Verbrauchsmaterials oder die Anwendung eines softwaremäßigen Korrekturprogramms erfordern, um die Qualität des Ausdrucks eines entsprechenden Tintenstrahldruckers bzw. Fotodruckers zu korrigieren.

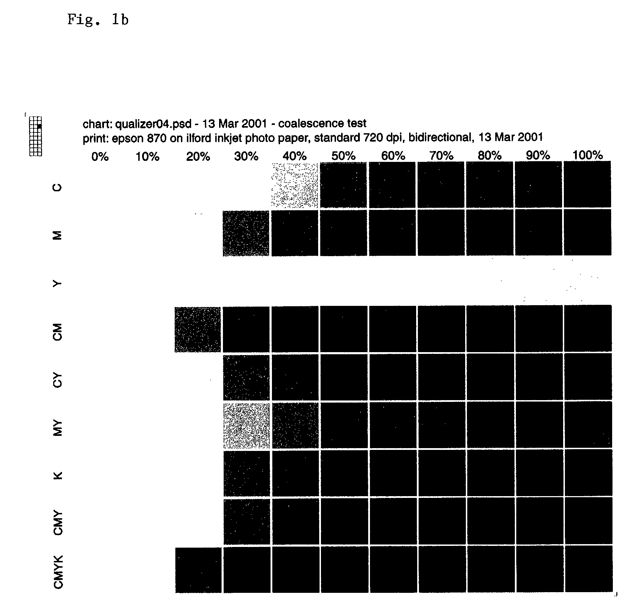

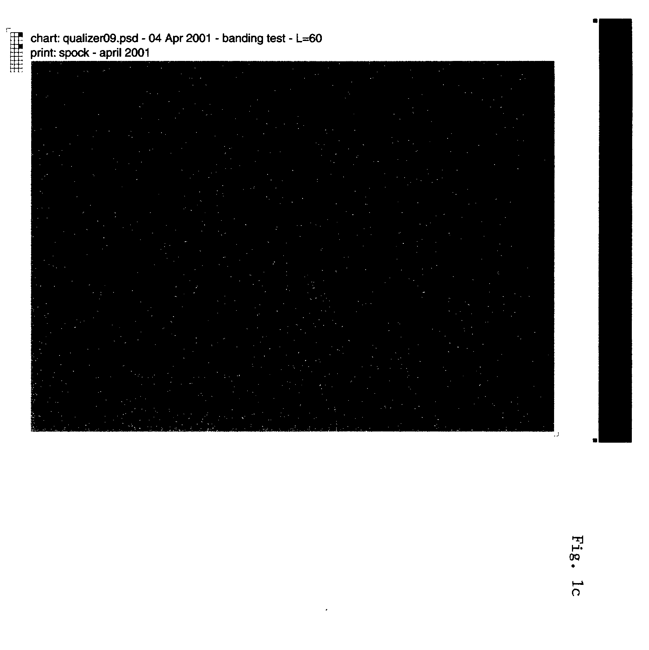

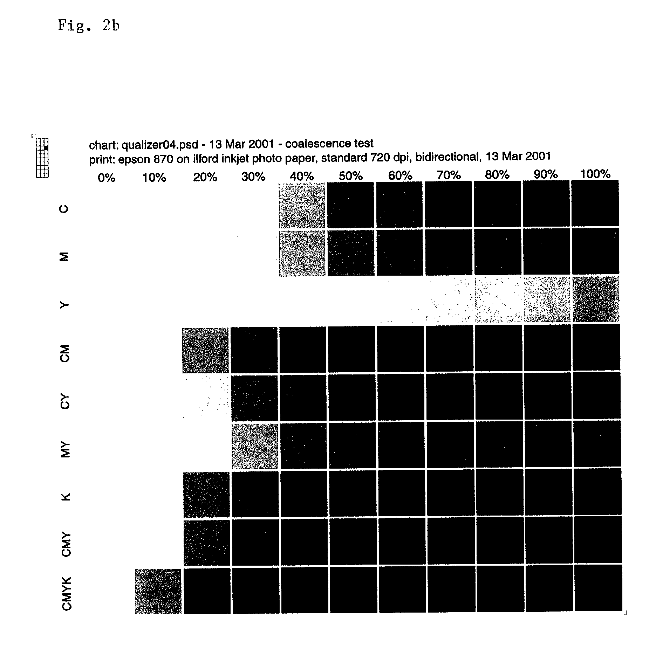

Die Fig. 2b lässt fotoprinterspezifisches Testmuster erkennen, das im Gegensatz zum Muster gemäß Fig. 1b an starken Coalescence-Störungen leidet. Auch hier würde das fotoprinterspezifische Testmuster, verglichen mit dem Bezugstestmuster, eine Wartung oder eine sonstige Korrektur zur Verbesserung der Bildqualität auslösen.

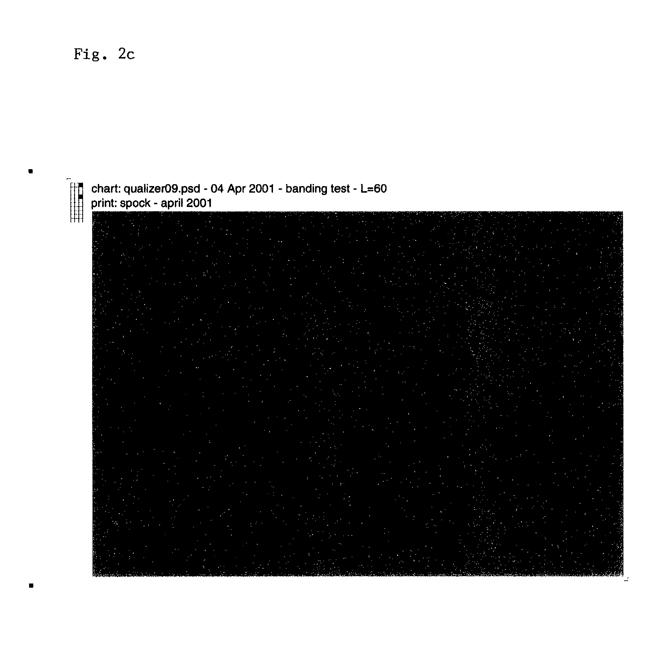

Das rechte Bild gemäß Fig. 1c lässt praktisch kein Banding erkennen, während das Bild gemäß Fig. 2c ein störendes horizontales Banding erkennen lässt, was gleichermaßen, verglichen mit dem Bezugstestmuster zu einer qualitätsverbessernden Reaktion führen kann.

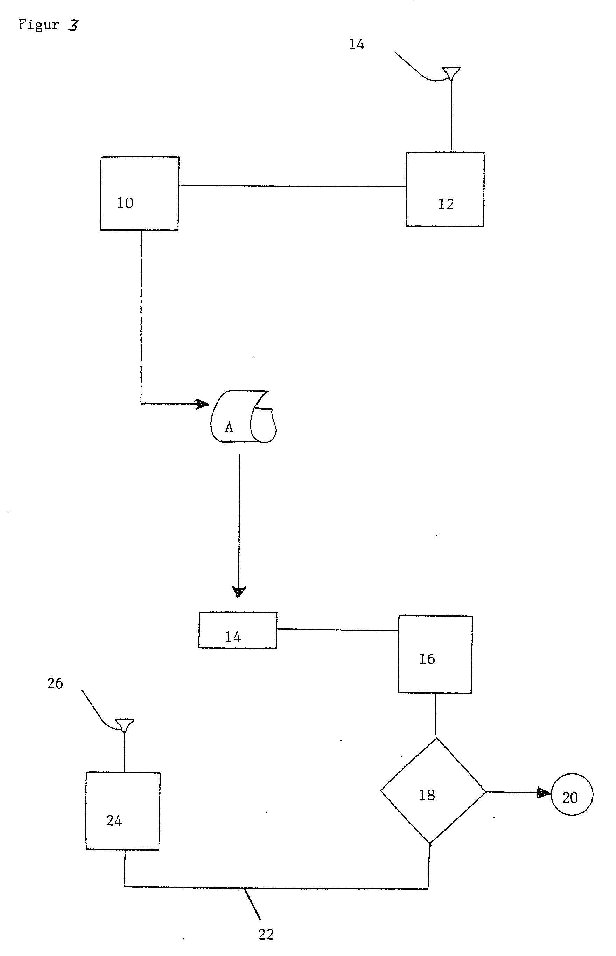

In der Fig. 3 ist ein Beispiel eines Ablaufes eines Verfahrens gemäß der Erfindung dargestellt.

Ein Fotoprinter 10, beispielsweise ein Farbtintenstrahlfotodrucker, ein Laserdrucker oder dgl., ist an einen Speicher 12 angeschlossen, der natürlich auch in dem Drucker 10 enthalten sein kann. In dem Speicher 12 ist ein Bezugstestkarte abgespeichert, die verschiedene Druckanweisungen enthalten kann, die von dem betreffenden Drucker 10 zur Erstellung eines fotoprinterspezifischen Testkartendrucks A herangezogen werden können.

Der Drucker 10 und/oder der Speicher 12 können an eine Datenleitung 11, beispielsweise das Internet, eine Telefonleitung oder dgl., angeschlossen sein, um abgewandelte Bezugstestkartendaten, Druckparameter oder Korrektursoftware zu empfangen. Natürlich kann der Speicher 12 auch Korrektursoftware enthalten, die dann über die Datenleitung 11 aktiviert werden kann bzw. mit abgewandelten Parametern versehen aktiviert werden kann.

So ist es beispielsweise möglich, bei Tintenstrahldruckern die Druckköpfe (relativ zueinander) anders zu positionieren oder während des Druckens anders zu bewegen, um das Banding zu beseitigen. Auch kann die Körnigkeit eines Ausdrucksabgemildert oder unterdrückt werden, wenn die Treibersoftware für einen entsprechenden Druckkopf variiert oder mit anderen Parametern betrieben wird. So ist es insbesondere auch möglich eine Ferndiagnose vorzunehmen und eine Fernwartung über eine Datenleitung 14 zu veranlassen.

Der Fotoprinter 10 druckt einen fotoprinterspezifischen Testkartendruck aus, der unmittelbar am Ort des Fotoprinters 10 zu einem Scanner in der Form eines Flachbettscanners oder einer Digitalkamera gebracht werden kann, um abgetastet und digitalisiert zu werden. Es ist auch denkbar, dass der Scanner oder die Digitalkamera bereits im Drucker eingebaut ist.

Die digitalisierten Bilddaten werden einem Rechner 16 übermittelt, der anhand von einzelnen oder mehreren Qualitätsmerkmalen bekannte oder neuartige Bildanalysen an den Bilddaten vornimmt. Der Rechner 16 kann auch eine Kalibrierung vornehmen, indem besondere Eigenarten des Scanners 14 rechnerisch aus den Bilddaten entfernt werden, um eine Bilddatennormierung durchzuführen. Die kalibrierten bzw. normierten Bilddaten können dann mit dem allgemein gültigen Testmustern der Bezugstestkarten verglichen werden.

Es kann dann in einer Entscheidungseinrichtung 18, die zu dem Rechner 16 gehören kann, entschieden werden, ob eine Wartung, Anwendung einer Korrektursoftware oder dgl. erforderlich ist. Dementsprechend kann in dem Falle, dass keine Wartung erforderlich ist, eine Alternative 20 ergriffen werden, wonach der Fotoprinter 10 unverändert weiter betrieben werden kann.

Andererseits kann, wie bereits angesprochen, über die Alternative 22 eine Wartung bzw. die Anwendung einer Qualitätsverbesserungssoftware veranlasst werden. Über eine Datenleitung 26 kann dann beispielsweise eine variierte Ansteuerung der Druckköpfe des Fotoprinters 10 bewirkt werden. Es kann eine Farbkorrektur veranlasst werden, und dgl. mehr.

## Patentansprüche

1. Verfahren zur automatischen Bestimmung der Bildqualität von durch Druck-Printeinrichtungen bzw. Photobelichtern erstellten Bildern, insbesondere für Farbtintenstrahlfotoprinter bzw. Tintenstrahlfotoprinter, mit den folgenden Merkmalen:
a) eine Bezugstestkarte wird erstellt und in eine digitale Form gewandelt;
b) die digitale Form der Bezugstestkarte wird in einen Fotoprinter eingegeben;
c) der Fotoprinter, insbesondere ein Farbtintenstrahlfotoprinter, erzeugt aufgrund der digitalen Bezugstestkarte einen fotoprinterspezifischen Testkartendruck;
d) der fotoprinterspezifische Testkartendruck wird abgetastet bzw. abgescannt und das so erhaltene digitale Bild des Testkatendrucks wird mit der digitalen Form der Bezugstestkarte verglichen;
e) anhand von Übereinstimmungen und/oder Abweichungen aufgrund des Vergleiches zwischen dem Bezugstestmuster und dem fotoprinterspezifischen Testbild wird wenigstens eine Qualitätsgröße bestimmt.

2. Verfahren nach Anspruch 1, **dadurch gekennzeichnet, dass** eine Bezugstestkarte oder ein Satz von Bezugstestkarten mehrere auf unterscheidbare Ursachen für Bildqualität spezifisch reagierende Testmuster enthält, die mit dem fotoprinterspezifischen Testbild bzw. dessen Testbildtestmustern verglichen werden.

3. Verfahren nach Anspruch 2, **dadurch gekennzeichnet, dass** von Testmustern eines fotoprinterspezifischen Testkartendrucks Realqualitätswerte bestimmt werden, die mit den Optimalqualitätswerten der Testmuster der Bezugstestkarte verglichen werden können.

4. Verfahren nach einem der Ansprüche 1 bis 3, **dadurch gekennzeichnet, dass**, wenn der Vergleich aus einem Toleranzintervall mit festlegbaren Grenzwerten herausführt, die Bildqualität als nicht ausreichend bestimmt wird.

5. Verfahren nach einem der Ansprüche 1 bis 4, **dadurch gekennzeichnet, dass** aufgrund der Qualitätsgröße ermittelt wird, ob eine Druck- bzw. Printeinrichtung gewartet, repariert, ersetzt oder dgl., werden muss.

6. Verfahren nach einem der voranstehenden Ansprüche, **dadurch gekennzeichnet, dass** die Druck- bzw. Printeinrichtung oder Photobelichteinrichtungeine Qualitätskorrektureinrichtung bzw. -software enthält, die aufgrund des Qualitätsprüfungsergebnisses angesprochen wird, um eine Qualitätsverbesserung durchzuführen.

7. Verfahren nach einem der Ansprüche 1 bis 6, **dadurch gekennzeichnet, dass** die Qualitätsgröße (n) kalibriert wird (werden), wobei gerätespezifische Eigenschaften von an dem Verfahren beteiligten Bilderfassungsgeräten oder dgl., berücksichtigt werden.

8. Verfahren nach einem der Ansprüche 1 bis 7, **dadurch gekennzeichnet, dass** die Lage von Testmustern auf dem fotoprinterspezifischen Testkartendruck bestimmt wird, um diese mit den entsprechenden Testmustern Bezugstestkarte automatisch zu vergleichen.

9. Verfahren nach einem der Ansprüche 1 bis 8, **dadurch gekennzeichnet, dass** mehrere für jeweils wenigstens einen Test konzipierte Analysetestmuster mit einem fotoprinterspezifischen Testkartendruck oder einem Satz solcher Testkartendrucke ausgegeben werden.

10. Verfahren nach einem der Ansprüche 1 bis 9, **dadurch gekennzeichnet, dass** die Bezugstestmuster und/oder das fotoprinterspezifische Testbild mehrere Testmuster für spezifische Analysen enthalten, für mindestens eines der folgenden Merkmale und Störungen:
i) Streifenbildung(Banding)
ii) Koaleszenz (Coalescence)
iii) Farbbluten (Color bleed)
iv) Punktzuwachs (Dot Gain)
v) Bilddeckungsfehler (Imagemisregistration)
vi) Farbdeckungsfehler (Colormisregistration)
vii) Körnigkeit (Graininess),
viii) Gleichmässigkeit (Uniformity),
ix) Bildschärfe (d.h. das Kontrast-Auflösungsverhalten)
x) Farbgleichgewicht (Color balance)
xi) Farbtreue (Color accuracy)
